# FASCICULE DE BREVET EUROPEEN

(11) **EP 3 243 177 B1**
(45) Date de publication et mention de la délivrance du brevet: **17.11.2021**
(21) Numéro de dépôt: 16700256.7
(22) Date de dépôt: 08.01.2016
(51) Int. Cl.: H04W 12/12, G06F 21/53, G06Q 20/42, G06Q 20/02, H04L 29/06, H04W 12/08, G06Q 20/40

(54) **MÉTHODE DE TRAITEMENT D'UNE AUTORISATION DE MISE EN OEUVRE D'UN SERVICE, DISPOSITIFS ET PROGRAMME D'ORDINATEUR CORRESPONDANT**
VERFAHREN ZUR VERARBEITUNG EINER AUTORISIERUNG ZUR IMPLEMENTIERUNG EINES DIENSTES, VORRICHTUNGEN UND ENTSPRECHENDES COMPUTERPROGRAMM
METHOD FOR PROCESSING AN AUTHORISATION TO IMPLEMENT A SERVICE, DEVICES AND CORRESPONDING COMPUTER PROGRAM

(30) Priorité: 09.01.2015 FR 1550193; 09.01.2015 FR 1550192; 09.01.2015 FR 1550191; 13.02.2015 FR 1551239
(43) Date de publication de la demande: 15.11.2017
(73) Titulaire: Ingenico Group, 75015 Paris (FR)
(72) Inventeur: QUENTIN, Pierre, 95880 Enghien-Les-Bains (FR)
(74) Mandataire: Vidon Brevets & Stratégie
(86) Numéro de dépôt international: PCT/EP2016/050316
(87) Numéro de publication internationale: WO 2016/110588

(56) Documents cités:
- EP-A1- 2 157 540
- WO-A2-2004/072914
- US-A1- 2010 114 733
- US-A1- 2011 238 569
- US-A1- 2014 074 714
- US-B1- 7 434 723

## Description

### 1. Domaine

La technique proposée se rapporte au traitement de transactions en ligne. La technique proposée se rapporte plus particulièrement au traitement hiérarchique de transactions. Plus spécifiquement, la technique proposée permet de sécuriser un accès à un bien ou un service par une personne dépositaire d'une autorité la mise en œuvre dudit service et ou l'accès audit bien. La méthode proposée s'inscrit par exemple dans la relation parent/enfant ou encore dans les relations tutélaires.

### 2. Art Antérieur

Il existe des techniques permettant à une personne dépositaire d'une autorité sur une autre personne de s'assurer qu'un bien ou un service reste inaccessible à une personne non autorisée. Le moyen le plus simple et le plus efficace, pour un bien, consiste à enfermer celui-ci à clé et à conserver la clé ou à conserver les moyens d'utilisation de ce bien : c'est par exemple le cas de clés de voitures qui peuvent être conservées par le dépositaire de l'autorité et fournies à la personne requérante à la discrétion de la personne dépositaire de l'autorité.

Pour les services, par exemple des accès Internet ou des accès à des services spécifiques sur Internet (par exemple des réseaux sociaux, etc.), le moyens le plus simple consiste à ne pas divulguer un mot de passe qui reste détenu par la personne dépositaire de l'autorité et qui est saisit par elle à chaque demande (si la personne dépositaire d'une autorité l'accepte bien entendu).

Pour d'autres types de services, comme par exemple des services de paiement, l'autorisation d'achat ou de retrait d'argent est souvent gérée par l'établissement bancaire : la personne dépositaire de l'autorité configure l'accès de la personne requérante à ses moyens de paiement en définissant par exemple des sommes maximales de retrait et/ou de dépense, etc.

Ces méthodes, qui peuvent être plus ou moins efficaces, souffrent cependant de problèmes qui sont souvent liés à la nécessité, pour la personne dépositaire d'une autorité d'être présente, au côté de la personne requérante pour valider ou non l'accès au bien ou au service. Pour les services bancaires bien que la présence de la personne dépositaire d'une autorité ne soit pas nécessaire, d'autres problèmes se posent : le plafond de dépense ou de retrait évite certes que trop d'argent soit inopinément dépense, cependant la granularité des dépenses effectuées ne peut pas être aisément contrôlée. Il n'est pas possible, par exemple d'accepter tel type d'achat et de refuser tel autre type d'achat.

Cette impossibilité de conférer une granularité est également préjudiciable pour d'autres services que les services de paiement. Ainsi, par exemple, dans le cas d'un accès à un réseau social, il n'est pas possible d'autoriser certaines actions (ajouter un commentaire par exemple) tout en en refusant d'autres (comme contacter une personne inconnue par exemple).

Il existe donc un besoin de fournir une méthode de traitement d'une autorisation de mise en œuvre d'un service ou d'accès à un bien qui ne présente pas ces inconvénients de l'art antérieur.

### 3. Résumé

La technique proposée ne présente pas ces inconvénients de l'art antérieur. Plus particulièrement, la technique proposée permet, à la personne dépositaire de l'autorité sur une autre personne, tout à la fois de gérer un accès à un bien ou à un service de manière fine tout en ne nécessitant pas une présence de la personne dépositaire de l'autorité.

Plus particulièrement, la technique proposée se rapporte à un procédé de traitement, par une entité de traitement, d'une autorisation de mise en œuvre d'un service et/ou d'accès à un bien.

Un tel procédé comprend :
- une étape de réception, en provenance d'un dispositif requérant, d'une requête de mise en œuvre d'un service et/ou d'accès à un bien ;
- une étape de recherche d'un indicateur de dépendance à partir d'au moins une donnée de ladite requête de mise en œuvre ;
- lorsqu'un indicateur de dépendance est présent, une étape d'obtention, auprès d'un dispositif de vérification, d'une autorisation de mise en œuvre dudit service et/ou d'accès audit bien.

Ainsi, il est possible, grâce à la technique proposée de contraindre l'accès à un bien ou la mise en œuvre d'un service à une autorisation donnée par un autre dispositif, distinct du dispositif requérant.

Selon une caractéristique particulière, l'étape d'obtention, auprès d'un dispositif de vérification, d'une autorisation de mise en œuvre dudit service et/ou d'accès audit bien comprend :
- l'obtention d'une donnée représentative d'un dispositif de vérification à laquelle l'autorisation doit être demandée ;
- la transmission d'une notification au dispositif de vérification auprès duquel cette autorisation doit être requise.
- une décision de délivrance d'une autorisation en fonction d'une donnée ou d'une absence de donnée reçue de la part du dispositif.

Selon une caractéristique particulière, la décision de délivrance d'une autorisation en fonction d'une donnée ou d'une absence de donnée reçue de la part du dispositif comprend une réception :
- soit d'une autorisation, comprenant une saisie, sur le dispositif de vérification, d'une information susceptible d'être comparée avec une information de référence ;
- soit d'une absence d'autorisation comprenant :
   - un refus spécifique, transmis dans une réponse à la notification précitée ; ou
   - une absence de réponse dans un temps imparti.

Selon une caractéristique particulière, ladite information susceptible d'être comparée avec une information de référence est un code d'identification personnel.

Ainsi, la technique proposée permet de sécuriser plus fortement que les techniques existantes les accès aux biens ou aux services.

Selon une caractéristique particulière, l'étape d'obtention, auprès d'un dispositif de vérification, comprend en outre :
- une transmission, au dispositif de vérification, d'une requête d'établissement d'une liaison sécurisée ;
- un établissement d'une liaison sécurisée, entre l'entité de traitement et l'environnement d'exécution sécurisé du dispositif de vérification ;
- une transmission de la notification au dispositif de vérification par l'intermédiaire de la liaison sécurisée, accompagnée d'une requête de saisie d'un code PIN ;
- une mise en œuvre d'un module d'affichage et d'un module de saisie sécurisés ;
- un chiffrement du code PIN saisi par le dispositif de vérification ;
- une transmission du code PIN chiffré à l'entité de traitement ;
- une vérification de la validité du code PIN saisi par l'entité de traitement.

Selon un autre aspect, la technique décrite se rapporte également à une entité de traitement d'une autorisation de mise en œuvre d'un service et/ou d'accès à un bien.

Une telle entité comprend :
- des moyens de réception d'une requête de mise en œuvre d'un service et/ou d'accès à un bien ;
- des moyens de recherche d'un indicateur de dépendance à partir d'au moins une donnée de ladite requête de mise en œuvre ;
- des moyens d'obtention, auprès d'un dispositif de vérification, d'une autorisation de mise en œuvre dudit service et/ou d'accès audit bien, lesdits moyens étant mis en œuvre lorsqu'un indicateur de dépendance est présent.

Selon un autre aspect, la technique décrite se rapporte également à un système de traitement d'une autorisation de mise en œuvre d'un service et/ou d'accès à un bien, système caractérisé en ce qu'il comprend :
- une entité de traitement d'une autorisation de mise en œuvre d'un service et/ou d'accès à un bien comprenant:
   - des moyens de réception d'une requête de mise en œuvre d'un service et/ou d'accès à un bien ;
   - des moyens de recherche d'un indicateur de dépendance à partir d'au moins une donnée de ladite requête de mise en œuvre ;
   - des moyens d'obtention, auprès d'un dispositif de vérification, d'une autorisation de mise en œuvre dudit service et/ou d'accès audit bien, lesdits moyens étant mis en œuvre lorsqu'un indicateur de dépendance est présent.
- un dispositif de vérification comprenant:
   - des moyens de réception d'une notification ;
   - des moyens de délivrance d'une autorisation, comprenant des moyens de saisie d'un code d'identification personnel sécurisé.

Dans au moins un mode de réalisation de la technique proposée, celle-ci nécessite une mise en œuvre par l'intermédiaire d'un terminal de communication de type téléphone intelligent, terminal comprenant un module de sécurisation de transaction appelé « secure element ». Un tel module de sécurisation de transaction est configuré pour être utilisé dans le cadre de la présente technique afin d'établir une connexion sécurisée entre le terminal de communication et un serveur.

Selon une implémentation préférée, les différentes étapes des procédés selon la technique proposée sont mises en œuvre par un ou plusieurs logiciels ou programmes d'ordinateur, comprenant des instructions logicielles destinées à être exécutées par un processeur de données d'un module relais selon la technique proposée et étant conçu pour commander l'exécution des différentes étapes des procédés.

En conséquence, la technique proposée vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de la technique proposée.

### 4. Figures

D'autres caractéristiques et avantages de la technique proposée apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique de la technique proposée ;
- la figure 2 détaille certaines étapes de mises en œuvre ;

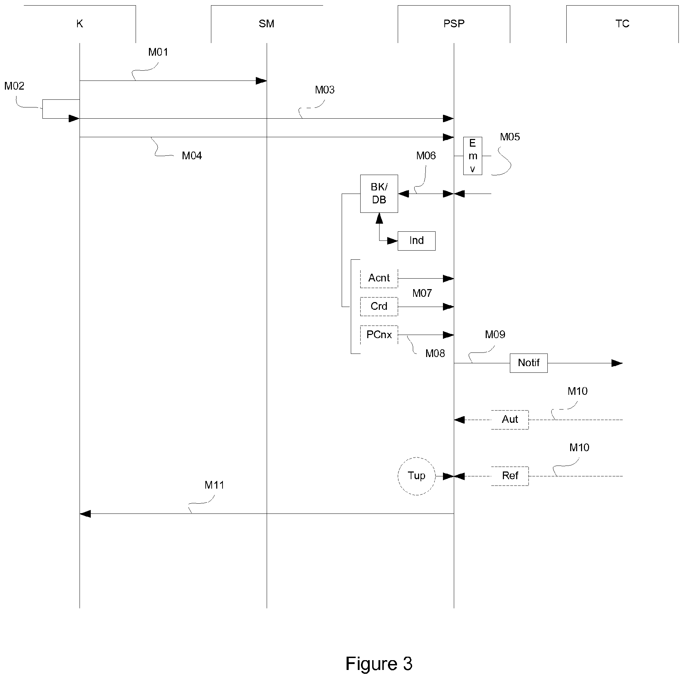

- la figure 3 explicite la mise en œuvre pour un service de paiement hiérarchique ;
- la figure 4 présente la structure d'un dispositif de traitement d'autorisation ;
- la figure 5 présente la structure d'un dispositif de communication ;

### 5. Description

### 5.1 Principe

Comme explicité, l'objet de la présente technique est de permettre la gestion d'un accès à un bien ou à un service de manière fine et sans besoin, pour une personne dépositaire d'une autorité de vérification ou d'accréditation, de se trouver proche ou à côté d'une personne requérant l'accès à un bien ou un service. La technique proposée est très utile par exemple dans le cas de relations parent/enfant (dans le cadre de l'autonomisation de l'enfant) et/ou dans le cas de relation tutélaire impliquant qu'une personne sous tutelle requiert, auprès d'une personne responsable, l'autorisation de réaliser telle ou telle action de la vie de tous les jours.

La technique proposée met en œuvre, d'une manière générale, plusieurs entités. Ces entités peuvent, en fonction des modes de réalisation être toutes distinctes. D'autres modes de réalisation peuvent comprendre la fusion de différentes entités, particulièrement les entités serveurs situées dans le réseau de communication et auxquelles le dispositif de vérification de l'utilisateur responsable est connecté.

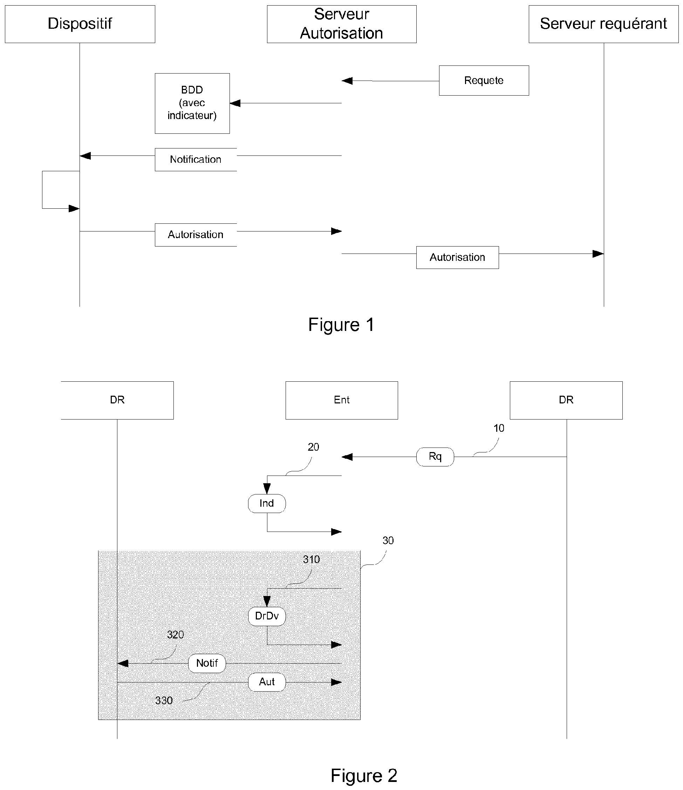

D'une manière générale, telle que décrite en relation avec la figure 1 et la figure 2, la méthode proposée comprend, au sein d'un serveur (qui est l'entité de traitement pour l'accès au bien ou au service) :
- une étape de réception (10) d'une requête (Rq) de mise en œuvre d'un service (ou d'accès à un bien) ; cette requête comprend des données permettant d'identifier d'une part le service en question, d'autre part un identifiant du requérant pour le service (par exemple un identifiant de l'enfant ou encore un numéro de compte bancaire ou encore un numéro de carte bancaire) et enfin des données complémentaires qui sont fonction du service requis ;
- une étape d'obtention (20) d'un indicateur de dépendance (InD) ; cet indicateur de dépendance peut être obtenu par exemple en recherchant, dans une base de données (DB), des données nécessaires à la mise en œuvre du service ;
- lorsqu'il constate qu'un indicateur de dépendance est présent et donc que l'accès au service nécessite l'obtention (30) d'une autorisation (Aut) auprès d'un dispositif de vérification, le serveut met en œuvre cette étape d'obtention (30) de l'autorisation (Aut).

L'obtention (30) d'une autorisation comprend par exemple :
∘ l'obtention (310) d'une donnée représentative d'un dispositif de vérification à laquelle l'autorisation doit être demandée ; cette donnée peut par exempple être une addresse à laquelle la dispositif de vérification doit être contacté (adresse IP, adresse MAC, par exemple) ;
∘ la transmission (320) d'une notification au dispositif de vérification auprès duquel cette autorisation doit être requise ; et
   suite à cette transmission,
∘ la réception (330), en provenance du dispositif de vérification :
   ▪ soit de l'autorisation (Aut), matérialisée par exemple par la saisie, *sur le dispositif de vérification ayant reçu la notification,* d'une information (InfS) susceptible d'être comparée avec une information de référence (infR), comme par exemple un PIN ou un PIN chiffré comparé avec un PIN ou un PIN chiffré de référence ;
   ▪ soit d'une absence d'autorisation (NonAut) matérialisée :
      - par un refus spécifique, transmis dans une réponse à la notification précitée ;
      - par une absence de réponse dans un temps donné.

L'autorisation est transmise au serveur (entité de traitement pour l'accès au bien ou au service), qui transmet à son tour cette autorisation si besoin, à l'entité requérante (qui peut être un autre serveur ou un dispositif).

De manière indirecte et complémentaire, la technique proposée s'applique également parfaitement à la surveillance, par une personne, de l'utilisation de ses propres biens ou services par elle-même. Par exemple, dans le cas d'une surveillance d'un accès à un réseau social, si un utilisateur reçoit, sur son terminal mobile (smartphone), agissant en tant que dispositif de vérification, une notification pour autoriser la publication, *en son nom,* d'un message sur son réseau social alors même que cet utilisateur n'est pas présentement connecté à ce réseau social et n'a pas requis une publication, cela peut être le signe d'un piratage ou d'une usurpation d'identité. La technique proposée permet alors de gérer simplement et efficacement ce type de problématique. En effet, l'indicateur de dépendance n'est pas uniquement utilisé pour indiquer une dépendance d'un service par rapport à un dépositaire d'une autorité ou d'une responsabilité. Il s'agit également d'indiquer une dépendance par rapport à une autorisation complémentaire.

Dans un mode de réalisation de réalisation particulier, il ne s'agit pas non plus, de transmettre un simple message à un dispositif complémentaire détenu par l'utilisateur (comme un terminal de communication mobile). Il s'agit plutôt dans ce mode de réalisation particulier de mettre en œuvre un processus sécurisé d'identification. Ainsi, à la différence de méthode telle que la méthode *3D Secure* (marque déposée), la notification transmise au dispositif de vérification s'insère dans un processus de transmission sécurisée de donnée au dispositif de vérification. Ce processus de transmission comprend :
- l'établissement d'une liaison sécurisée, de type SSH (avec par exemple établissement d'une liaison privée virtuelle) entre le serveur et le dispositif de vérification de l'utilisateur (par exemple son smartphone) ; cette liaison peut être établie pour une durée limitée ;
- l'obtention de matériels de chiffrement permettant le chiffrement des données échangées entre le dispositif de vérification et le serveur ;
- la transmission de la notification au dispositif de vérification de l'utilisateur par l'intermédiaire de la liaison sécurisée, accompagnée d'une requête de saisie d'un code d'identification (de type code PIN ou authentification biométrique) ;
- le chiffrement du code PIN saisi sur le dispositif de vérification par l'utilisateur;
- la transmission du code PIN chiffré au serveur ;
- la vérification de la validité du code PIN saisi par le serveur.

Dans ce mode de réalisation, on se situe donc dans un traitement relativement éloigné, en termes de sécurisation, d'un traitement consistant à saisir (sur le terminal du requérant, donc pas sur le terminal de vérification) d'un code reçu par SMS (sur le terminal de vérification) dans un champ prévu à cet effet.

Dans un mode de réalisation spécifique de la technique proposée, le dispositif auprès duquel la notification d'autorisation est transmise est un terminal de communication, par exemple de type smartphone.

Dans un mode de réalisation de la présente technique, qui est d'ailleurs complémentaire du mode de réalisation décrit par la suite (autorisation de paiement), le terminal de vérification (qui se présente sous la forme d'un terminal de communication de type smartphone) comprend des moyens d'exécution sécurisée de certaines commandes spécifiques. Ces moyens d'exécution sécurisés comprennent par exemple un module d'affichage sécurisé et un module de saisie sécurisé.

Un module d'affichage sécurisé garantit l'intégrité d'un affichage sur l'écran du terminal de vérification. Il assure que les données qu'il affiche sur l'écran ne sont pas compromises (i.e. modifiées postérieurement par un autre processus). Un module d'affichage sécurisé comprend un circuit (matériel et/ou logiciel) d'interruption permettant de contrôler l'affichage du terminal de communication, pour notamment, empêcher un logiciel ou un circuit malveillant d'afficher des informations durant la mise en œuvre d'un processus sécurisé. Le module d'affichage sécurisé reçoit les données à afficher par exemple d'un processeur d'exécution sécurisé et/ou d'une interface réseau comprenant les données à afficher (sans modification ou retraitement). Le module d'affichage sécurisé affiche ces données et empêche tout autre module (non sécurisé) d'altérer cet affichage.

Un module de saisie sécurisé garantit l'intégrité d'une saisie réalisée sur les moyens de saisie du terminal de vérification. Il assure que les données qu'il reçoit ne sont pas compromises (i.e. modifiées postérieurement par un autre processus ou enregistrées en parallèle par un autre processus). Un module de saisie sécurisé comprend un circuit (matériel et/ou logiciel) de réception permettant de recevoir directement, sans intermédiaire, les informations en provenance de l'interface de saisie (interface tactile ou interface de saisie mécanique).

Selon la technique proposée optionnellement, un tel terminal embarque également un module dénommé « secure element » (SE) ou « élément de sécurisation ». Un « secure element » est un module de sécurisation intégré au sein du terminal de communication. Un tel module permet de sécuriser des données transmises entre le terminal de communication et un dispositif auquel il est connecté (par exemple un serveur). Un tel module se présente sous la forme d'un processeur comprenant optionnellement une mémoire sécurisée dédiée. Lorsqu'il ne comprend pas une mémoire sécurisée dédiée, un tel processeur comprend une interface d'accès à une mémoire sécurisée.

Dans un mode de réalisation spécifique de la technique proposée, le dispositif auprès duquel la notification d'autorisation est transmise, comprend également un environnement d'exécution sécurisé (TEE). L'avantage de cette approche est de mettre en œuvre à la fois un module de sécurisation (SE) pour ses caractéristiques de sécurisation et à la fois un environnement d'exécution sécurisé (TEE) pour l'environnement d'exécution plus riche qu'il offre. En d'autres termes l'environnement d'exécution sécurisé (TEE) est en charge de l'affichage de la notification sur l'écran du dispositif de vérification et est en charge de la sécurisation de la saisie de l'utilisateur dépositaire tandis que le module de sécurisation offre des fonctionnalités de chiffrement et de traitement plus basiques mais également plus sécurisée. L'avantage de cette approche est que le module de sécurisation SE peut faire l'objet d'une certification (par exemple d'une certification bancaire) de manière beaucoup plus simple qu'un environnement d'exécution sécurisé (TEE). Dès lors, un avantage supplémentaire de la solution proposée, lorsqu'elle est utilisée pour effectuer un paiement, réside dans le fait que cette solution peut être certifiée de manière beaucoup plus simple.

Selon un aspect de la technique proposée, le dispositif de vérification est par ailleurs connecté au démarrage de celui-ci à un serveur de contrôle. Le serveur de contrôle est en charge de la vérification de la non compromission du dispositif de vérification. Lors de son démarrage, le dispositif de vérification se connecte à un serveur (qui peut être le même que le serveur préalablement décrit) afin d'effectuer une vérification de conformité de configuration. Cette vérification est effectuée en réalisant un enregistrement auprès du serveur. Cet enregistrement comprend un échange de données chiffrées entre le dispositif de vérification et le serveur de contrôle, sous la forme par exemple d'un double « challenge/réponse ». Le serveur de contrôle est utilisé pour tenir à jour, une liste des terminaux de communication connecté au service. Les données (clés privées/clés publiques) qui sont utilisées pour effectuer l'enregistrement du dispositif de vérification auprès du serveur de contrôle sont contenues par exemple dans le module de sécurisation intégré au dispositif de vérification.

### 5.2 Description d'un mode de réalisation particulier

La technique proposée trouve une application intéressante dans le cas d'un paiement hiérarchisé. Par exemple dans le cadre d'une relation parent/enfant, il peut être intéressant (pour le parent) de valider les achats effectués par l'enfant, afin de s'assurer, par exemple, que celui-ci ne dépense pas de manière inconsidérée. Dès lors, dans ce cas précis, la méthode objet de l'invention est mise en œuvre afin de traiter une autorisation de paiement. L'autorisation de paiement est donnée par le parent en charge de l'enfant (ce type de scénario peut également être mis en œuvre pour toute personne sous tutelle).

Dans ce cas d'usage (service de paiement), le fonctionnement général est le suivant :
- L'enfant (ou la personne sous tutelle) (K) remplit (M01) un panier d'achat, par exemple sur un site internet distant, dit site marchand (SM).
- au moment du paiement, l'enfant, qui possède sa propre carte bancaire, sélectionne (M02), parmi les types de cartes disponibles, un type de carte à utiliser (Visa, Mastercard, Amex, etc.) ;
- cette sélection provoque la redirection (M03) vers une application de paiement gérée par un prestataire de services de paiement (PSP), en vue d'effectuer un paiement ;
- l'enfant saisit (M04) les données de sa carte de paiement afin de réaliser le paiement (nom du porteur et/ou numéro et/ou date de validité et/ou code de vérification).
- une transaction de type EMV (en mode carte non présente) est alors mise en œuvre (M05) par le prestataire de services de paiement PSP (auquel le site marchand SM a délégué la mise en œuvre du paiement). Cette transaction comprend une obtention (M06) (par exemple une recherche au sein d'une base de données DB) de données de comparaison permettant de vérifier que les données saisies sont valides (ou encore l'obtention d'une autorisation auprès d'un établissement bancaire BK).
- au moment de cette obtention (M06), le prestataire de services de paiement PSP obtient également un *indicateur de la dépendance* (Ind) de ces données de paiement (dépendance à une autorisation complémentaire devant être fournie par un dispositif de vérification). D'autres paramètres peuvent également être obtenus comme par exemple un éventuel plafond financier pour l'autorisation.
- lorsque le prestataire de services de paiement constate que les données de cartes qui lui sont fournies (ou que l'autorisation qui lui est fournie) nécessitent l'obtention d'une autorisation pour être utilisées, la méthode comprend alors :
   ∘ l'obtention (M07) du compte (Acnt) et/ou de la carte (Crd) à laquelle l'autorisation doit être demandée ; et/ou
   ∘ l'obtention (M08) d'au moins un paramètre de connexion (PCnx) à un terminal de communication (TC) auprès duquel cette autorisation doit être requise (en fonction des données de compte ou de carte préalablement obtenues ou de manière indépendante de ces données de compte ou de carte) ; il s'agit par exemple d'une adresse IP ou d'une adresse MAC du dispositif de vérification) ;
   ∘ la transmission (M09) d'une notification (notif) à ce terminal de communication (par la méthode décrite préalablement) ;
   ∘ la réception (M10) :
      ■ soit de l'autorisation (Aut), matérialisée par exemple par la saisie, sur le dispositif de vérification ayant reçu la notification, d'une information susceptible d'être comparée avec une information de référence ;
      ■ soit d'une absence d'autorisation matérialisée :
         - par un refus spécifique (Ref), transmis dans une réponse à la notification précitée ;
         - par une absence de réponse dans un temps donné (Tup).

La finalisation de la transaction (i.e. acceptation et paiement ou refus) est ensuite réalisée par la prestataire de service de paiement (PSP). Une réponse est éventuellement transmise (M11) au terminal requérant (terminal de l'enfant).

Comme indiqué préalablement, la transmission de la notification au terminal de communication comprend les étapes suivantes qui ont lieu entre le serveur du prestataire de paiement et le terminal de communication du parent :
- une transmission, au dispositif de vérification, d'une requête d'établissement d'une liaison sécurisée ;
- l'établissement d'une liaison sécurisée, par exemple de type SSH (avec par exemple établissement d'une liaison privée virtuelle) entre l'entité de traitement et l'environnement d'exécution sécurisé du dispositif de vérification de communication du parent ; cette liaison est établie pour une durée limitée ;
- l'obtention de matériels de chiffrement permettant le chiffrement des données échangées entre le dispositif de vérification de communication et l'entité de traitement (matériel de chiffrement temporaire, complémentaire) ;
- la transmission de la notification au dispositif de vérification de communication par l'intermédiaire de la liaison sécurisée, accompagnée d'une requête de saisie d'un code PIN ;
- la mise en œuvre d'un module d'affichage et d'un module de saisie sécurisés pour permettre une saisie également sécurisée du code PIN ;
- le chiffrement du code PIN (saisi) par le dispositif de vérification de communication ;
- la transmission du code PIN chiffré à l'entité de traitement ;
- la vérification de la validité du code PIN saisi par l'entité de traitement.

La validité du code PIN saisit vaut autorisation : cela signifie que c'est la saisie d'un code PIN valide et la vérification de la conformité de celui-ci qui entraine l'autorisation. Au contraire, une absence de saisie pendant un temps prédéterminé ou une saisie erronée entraine un refus.

De manière complémentaire, le procédé d'obtention d'une autorisation peut mettre en œuvre un terminal de paiement virtuel. Le terminal de paiement virtuel est instancié par l'intermédiaire d'un serveur de prestataire de service de paiement. Il permet d'établir une liaison sécurisée avec le terminal de vérification. Une telle mise en œuvre est alors conforme aux méthodes décrites dans les documents FR1550192 et FR1550193.

### 5.3 Dispositifs de mises en œuvre.

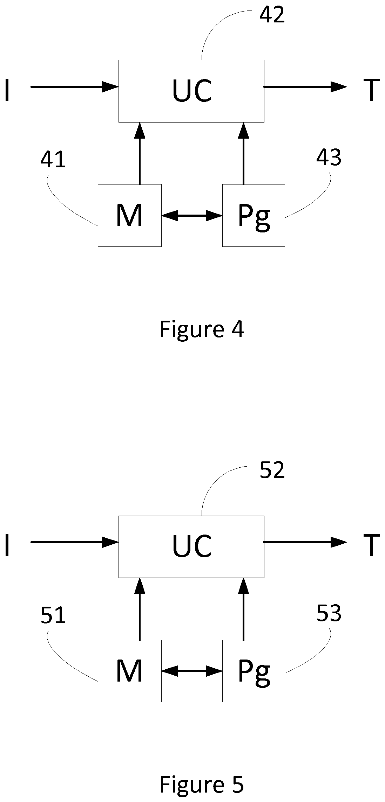

On décrit, en relation avec la figure 4, un dispositif de traitement comprenant des moyens permettant l'exécution du procédé décrit préalablement.

Par exemple, le dispositif de traitement comprend une mémoire 41 constituée d'une mémoire tampon, une unité de traitement 42, équipée par exemple d'un microprocesseur, et pilotée par le programme d'ordinateur 43, mettant en œuvre les étapes nécessaires au traitement d'autorisation de mise en œuvre de services ou d'accès à des biens.

À l'initialisation, les instructions de code du programme d'ordinateur 43 sont par exemple chargées dans une mémoire avant d'être exécutées par le processeur de l'unité de traitement 42. L'unité de traitement 42 reçoit en entrée par exemple un ensemble de lexèmes initiaux ou des données de dictionnaires existant. Le microprocesseur de l'unité de traitement 42 met en œuvre les étapes du procédé, selon les instructions du programme d'ordinateur 43 pour permettre l'accès au bien ou au service.

Pour cela, le dispositif de traitement comprend, outre la mémoire tampon 41, des moyens d'obtention d'une information externe au dispositif, comme un ensemble de données accessibles en base ; ces moyens peuvent se présenter sous la forme d'un module d'accès à un réseau de communication tel qu'une carte réseau. Le dispositif comprend également des moyens de traitement, de ces données pour délivrer des données permettant l'accès à un dispositif de vérification ; ces moyens de traitement comprennent par exemple un processeur spécialisé dans cette tâche; le dispositif comprend également un ou plusieurs moyens d'accès à une ou plusieurs bases de données. Le dispositif comprend également des moyens de mises à jour d'autorisation et/ou d'accès à des biens ou des services, notamment des moyens de pondération de relations entre les formes lexicales et/ou grammaticales composant le dictionnaire.

Ces moyens peuvent être pilotés par le processeur de l'unité de traitement 42 en fonction du programme d'ordinateur 43.

On décrit, en relation avec la figure 5, un dispositif de vérification comprenant des moyens permettant l'exécution du procédé décrit préalablement.

Par exemple, le dispositif de vérification comprend une mémoire 51 constituée d'une mémoire tampon, une unité de traitement 52, équipée par exemple d'un microprocesseur, et pilotée par le programme d'ordinateur 53, mettant en œuvre nécessaires à la mise en œuvre des fonctions de vérification.

À l'initialisation, les instructions de code du programme d'ordinateur 53 sont par exemple chargées dans une mémoire avant d'être exécutées par le processeur de l'unité de traitement 52. L'unité de traitement 52 reçoit en entrée par exemple une notification. Le microprocesseur de l'unité de traitement 52 met en œuvre les étapes du procédé de création, selon les instructions du programme d'ordinateur 53 pour permettre la saisie d'un code d'autorisation (un code PIN par exemple).

Pour cela, le dispositif comprend, outre la mémoire tampon 51, des moyens d'affichage et de saisie ; ces moyens peuvent se présenter sous la forme d'un processeur ou d'un ensemble de ressources sécurisées permettant de sécuriser la saisie de l'autorisation. Le dispositif comprend également des moyens de traitement cryptographiques; ces moyens de traitement comprennent par exemple un processeur de chiffrement dédié et des clés de chiffrement, comme des clés de session dérivée d'une clé initiale.

Ces moyens peuvent être pilotés par le processeur de l'unité de traitement 52 en fonction du programme d'ordinateur 53.

## Revendications

1. Procédé de traitement, par une entité de traitement (EnT) et un dispositif de vérification, d'une autorisation pour la mise en œuvre d'un service et/ou l'accès à un bien, procédé **caractérisé en ce qu'**il comprend :
- une étape de réception (10), par l'entité de traitement, en provenance d'un dispositif requérant (DR), d'une requête (Rq) de mise en œuvre d'un service et/ou d'accès à un bien ;
- une étape de recherche (20), par l'entité de traitement, d'un indicateur de dépendance (InD) à partir d'au moins une donnée de ladite requête (Rq) de mise en oeuvre ;
- lorsqu'un indicateur de dépendance (InD) est présent, une étape d'obtention (30), auprès du dispositif de vérification (DV), d'une autorisation (Aut) de mise en œuvre dudit service et/ou d'accès audit bien comprenant :
- l'obtention (310), par l'entité de traitement, d'une donnée représentative (DrDv) du dispositif de vérification à laquelle l'autorisation (Aut) doit être demandée ;
- la transmission, par l'entité de traitement, au dispositif de vérification (DV), d'une requête d'établissement d'une liaison sécurisée ;
- l'établissement d'une liaison sécurisée, entre l'entité de traitement et un environnement d'exécution sécurisé du dispositif de vérification (DV) ;
- la transmission (320) d'une notification (Notif) au dispositif de vérification (DV), par l'intermédiaire de la liaison sécurisée, accompagnée d'une requête de saisie d'un code d'identification ;
- la mise en œuvre d'un module d'affichage et d'un module de saisie sécurisés du dispositif de vérification ;
- le chiffrement du code d'identification saisi par l'utilisateur sur le dispositif de vérification (DV) ;
- la transmission, par le dispositif de vérification, du code d'identification chiffré à l'entité de traitement ;
- la vérification, par l'entité de traitement, de la validité du code d'identification saisi ; et
- une décision de délivrance (330) d'une autorisation (Aut) en fonction de la validité du code d'identification saisi ou d'une absence de donnée reçue de la part du dispositif de vérification.

2. Procédé selon la revendication 1, **caractérisé en ce que** la décision de délivrance d'une autorisation en fonction d'une donnée ou d'une absence de donnée reçue de la part du dispositif comprend une réception :
- soit d'une autorisation, comprenant une saisie, sur le dispositif de vérification, de ladite information susceptible d'être comparée avec une information de référence ;
- soit d'une absence d'autorisation comprenant :
- un refus spécifique, transmis dans une réponse à la notification précitée ; ou
- une absence de réponse dans un temps imparti.

3. Procédé de traitement selon la revendication 2, **caractérisé en ce que** ladite information susceptible d'être comparée avec une information de référence est un code d'identification personnel (PIN) ou une authentification biométrique.

4. Entité de traitement d'une autorisation pour la mise en œuvre d'un service et/ou l'accès à un bien, entité **caractérisée en ce qu'**elle comprend :
- des moyens de réception d'une requête de mise en œuvre du service et/ou d'accès audit bien ;
- des moyens de recherche d'un indicateur de dépendance à partir d'au moins une donnée de ladite requête de mise en œuvre du service et/ou d'accès audit bien ;
- des moyens d'obtention, auprès d'un dispositif de vérification, d'une autorisation de mise en œuvre dudit service et/ou d'accès audit bien, lesdits moyens étant mis en œuvre lorsqu'un indicateur de dépendance est présent, et comprenant la mise en œuvre :
- de moyens d'obtention (310), par l'entité de traitement, d'une donnée représentative (DrDv) du dispositif de vérification à laquelle l'autorisation (Aut) doit être demandée ;
- de moyens de transmission, par l'entité de traitement, au dispositif de vérification (DV), d'une requête d'établissement d'une liaison sécurisée ;
- de moyens d'établissement d'une liaison sécurisée, entre l'entité de traitement et un environnement d'exécution sécurisé du dispositif de vérification (DV) ;
- de moyens de transmission (320) d'une notification (Notif) au dispositif de vérification (DV), par l'intermédiaire de la liaison sécurisée, accompagnée d'une requête de saisie d'un code d'identification ;
- de moyens de réception du code d'identification chiffré saisi par l' utilisateur sur le dispositif de vérification;
- de moyens de vérification, par l'entité de traitement, de la validité du code d'identification saisi ; et
- de moyens de fourniture d'une décision de délivrance (330) d'une autorisation (Aut) en fonction de la validité du code d'identification saisi ou d'une absence de donnée reçue de la part du dispositif de vérification.

5. Système de traitement d'une autorisation pour la de mise en œuvre d'un service et/ou l'accès à un bien, système **caractérisé en ce qu'**il comprend :
- une entité de traitement d'une autorisation de mise en œuvre d'un service et/ou d'accès à un bien comprenant:
- des moyens de réception d'une requête de mise en œuvre d'un service et/ou d'accès audit bien ;
- des moyens de recherche d'un indicateur de dépendance à partir d'au moins une donnée de ladite requête de mise en œuvre du service et/ou d'accès audit bien;
- des moyens d'obtention, auprès d'un dispositif de vérification, d'une autorisation de mise en œuvre dudit service et/ou d'accès audit bien, lesdits moyens étant mis en œuvre lorsqu'un indicateur de dépendance est présent, et comprenant la mise en œuvre :
- de moyens d'obtention (310), par l'entité de traitement, d'une donnée représentative (DrDv) du dispositif de vérification à laquelle l'autorisation (Aut) doit être demandée ;
- de moyens de transmission, par l'entité de traitement, au dispositif de vérification (DV), d'une requête d'établissement d'une liaison sécurisée ;
- de moyens d'établissement d'une liaison sécurisée, entre l'entité de traitement et un environnement d'exécution sécurisé du dispositif de vérification (DV) ;
- de moyens de transmission (320) d'une notification (Notif) au dispositif de vérification (DV), par l'intermédiaire de la liaison sécurisée, accompagnée d'une requête de saisie d'un code d'identification ;
- de moyens de réception du code d'identification chiffré saisi par l'utilisateur sur le dispositif de vérification;
- de moyens de vérification, par l'entité de traitement, de la validité du code d'identification saisi ; et
- de moyens de fourniture d'une décision de délivrance (330) d'une autorisation (Aut) en fonction de la validité du code d'identification saisi ou d'une absence de donnée reçue de la part du dispositif de vérification
- le dispositif de vérification comprenant:
- des moyens de réception, d'une requête d'établissement d'une liaison sécurisée ;
- des moyens d'établissement d'une liaison sécurisée, entre l'entité de traitement et l'environnement d'exécution sécurisé du dispositif de vérification (DV) ;
- des moyens de réception (320) d'une notification (Notif) au dispositif de vérification (DV), par l'intermédiaire de la liaison sécurisée, accompagnée d'une requête de saisie d'un code d'identification ;
- des moyens de mise en œuvre d'un module d'affichage et d'un module de saisie sécurisés du dispositif de vérification ;
- des moyens de chiffrement du code d'identification saisi par l'utilisateur sur le dispositif de vérification (DV) ;
- des moyens de transmission, par le dispositif de vérification, du code d'identification chiffré à l'entité de traitement ;

6. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de traitement selon la revendication 1, lorsqu'il est exécuté sur un processeur.

## Patentansprüche

1. Verfahren zur Verarbeitung einer Genehmigung für das Umsetzen eines Dienstes und/oder den Zugang zu einer Ware durch eine Verarbeitungseinheit (EnT) und eine Überprüfungsvorrichtung, Verfahren, das **dadurch gekennzeichnet ist, dass** es aufweist:
- einen Schritt des Empfangens (10) einer Anfrage (Rq) zum Umsetzen eines Dienstes und/oder des Zugangs zu einer Ware durch die Verarbeitungseinheit von einer Anfragevorrichtung (DR),
- einen Schritt des Suchens (20) eines Abhängigkeitsindikators (InD) ausgehend von mindestens einer Dateneinheit der Anfrage (Rq) zum Umsetzen durch die Verarbeitungseinheit,
- wenn ein Abhängigkeitsindikator (InD) vorhanden ist, einen Schritt des Erhaltens (30) einer Genehmigung (Aut) zum Umsetzen des Dienstes und/oder des Zugangs zu der Ware durch die Überprüfungsvorrichtung (DV), umfassend:
- das Erhalten (310) einer repräsentativen Dateneinheit (DrDv) der Überprüfungsvorrichtung, bei der die Genehmigung (Aut) angefordert werden muss, durch die Verarbeitungseinheit,
- das Übertragen einer Anfrage zum Aufbauen einer gesicherten Verbindung an die Überprüfungsvorrichtung (DV) durch die Verarbeitungseinheit,
- das Aufbauen einer gesicherten Verbindung zwischen der Verarbeitungseinheit und einer gesicherten Ausführungsumgebung der Überprüfungsvorrichtung (DV),
- das Übertragen (320) einer Benachrichtigung (Notif) an die Überprüfungsvorrichtung (DV) über die gesicherte Verbindung, die von einer Anfrage zum Eingeben eines Identifikationscodes begleitet wird,
- das Einsetzen eines gesicherten Anzeigemoduls und eines gesicherten Eingabemoduls der Überprüfungsvorrichtung,
- das Verschlüsseln des Identifikationscodes, der von dem Benutzer in die Überprüfungsvorrichtung (DV) eingegeben wird,
- das Übertragen des verschlüsselten Identifikationscodes an die Verarbeitungseinheit durch die Überprüfungsvorrichtung,
- das Überprüfen der Gültigkeit des eingegebenen Identifikationscodes durch die Verarbeitungseinheit und
- eine Entscheidung über die Erteilung (330) einer Genehmigung (Aut) in Abhängigkeit von der Gültigkeit des eingegebenen Identifikationscodes oder von einem Fehlen von einer Dateneinheit, die von der Überprüfungsvorrichtung empfangen wird.

2. Verfahren nach Anspruch 1, **dadurch gekennzeichnet, dass** die Entscheidung über die Erteilung einer Genehmigung in Abhängigkeit von einer Dateneinheit oder einem Fehlen von einer Dateneinheit, die von der Vorrichtung empfangen wird, ein Empfangen aufweist:
- entweder einer Genehmigung, umfassend ein Eingeben der Information, die geeignet ist, mit einer Referenzinformation verglichen zu werden, in die Überprüfungsvorrichtung,
- oder einer Nichterteilung einer Genehmigung, umfassend:
- eine spezifische Ablehnung, die in einer Antwort auf die oben genannte Benachrichtigung übertragen wird, oder
- ein Ausbleiben einer Antwort in einer vorgegebenen Zeit.

3. Verfahren zur Verarbeitung nach Anspruch 2, **dadurch gekennzeichnet, dass** die Information, die geeignet ist, mit einer Referenzinformation verglichen zu werden, ein persönlicher Identifikationscode (PIN) oder eine biometrische Authentifizierung ist.

4. Verarbeitungseinheit einer Genehmigung für das Umsetzen eines Dienstes und/oder den Zugang zu einer Ware, Einheit, die **dadurch gekennzeichnet ist, dass** sie aufweist:
- Mittel zum Empfangen einer Anfrage zum Umsetzen eines Dienstes und/oder des Zugangs zu der Ware,
- Mittel zum Suchen eines Abhängigkeitsindikators ausgehend von mindestens einer Dateneinheit des Antrags zum Umsetzen des Dienstes und/oder des Zugangs zu der Ware,
- Mittel zum Erhalten einer Genehmigung zum Umsetzen des Dienstes und/oder des Zugangs zu der Ware durch eine Überprüfungsvorrichtung, wobei die Mittel eingesetzt werden, wenn ein Abhängigkeitsindikator vorhanden ist, und das Einsetzen aufweisen von:
- Mitteln zum Erhalten (310) einer repräsentativen Dateneinheit (DrDv) der Überprüfungsvorrichtung, bei der die Genehmigung (Aut) angefordert werden muss, durch die Verarbeitungseinheit,
- Mitteln zum Übertragen einer Anfrage zum Aufbauen einer gesicherten Verbindung an die Überprüfungsvorrichtung (DV) durch die Verarbeitungseinheit,
- Mitteln zum Aufbauen einer gesicherten Verbindung zwischen der Verarbeitungseinheit und einer gesicherten Ausführungsumgebung der Überprüfungsvorrichtung (DV),
- Mitteln zum Übertragen (320) einer Benachrichtigung (Notif) an die Überprüfungsvorrichtung (DV) über die gesicherte Verbindung, die von einer Anfrage zum Eingeben eines Identifikationscodes begleitet ist,
- Mitteln zum Empfangen des verschlüsselten Identifikationscodes, der von dem Benutzer in die Überprüfungsvorrichtung eingegeben ist,
- Mitteln zum Überprüfen der Gültigkeit des eingegebenen Identifikationscodes durch die Verarbeitungseinheit und
- Mitteln zum Bereitstellen einer Entscheidung über die Erteilung (330) einer Genehmigung (Aut) in Abhängigkeit von der Gültigkeit des eingegebenen Identifikationscodes oder von einem Fehlen von einer Dateneinheit, die von der Überprüfungsvorrichtung empfangen wird.

5. System zum Verarbeiten einer Genehmigung für das Umsetzen eines Dienstes und/oder den Zugang zu einer Ware, System, das **dadurch gekennzeichnet ist, dass** es aufweist:
- eine Verarbeitungseinheit einer Genehmigung für das Umsetzen eines Dienstes und/oder den Zugang zu einer Ware, umfassend:
- Mittel zum Empfangen einer Anfrage zum Umsetzen eines Dienstes und/oder des Zugangs zu der Ware,
- Mittel zum Suchen eines Abhängigkeitsindikators ausgehend von mindestens einer Dateneinheit des Antrags zum Umsetzen des Dienstes und/oder des Zugangs zu der Ware,
- Mittel zum Erhalten einer Genehmigung zum Umsetzen des Dienstes und/oder des Zugangs zu der Ware durch eine Überprüfungsvorrichtung, wobei die Mittel eingesetzt werden, wenn ein Abhängigkeitsindikator vorhanden ist, und das Einsetzen aufweisen von:
- Mitteln zum Erhalten (310) einer repräsentativen Dateneinheit (DrDv) der Überprüfungsvorrichtung, bei der die Genehmigung (Aut) angefordert werden muss, durch die Verarbeitungseinheit,
- Mitteln zum Übertragen einer Anfrage zum Aufbauen einer gesicherten Verbindung an die Überprüfungsvorrichtung (DV) durch die Verarbeitungseinheit,
- Mitteln zum Aufbauen einer gesicherten Verbindung zwischen der Verarbeitungseinheit und einer gesicherten Ausführungsumgebung der Überprüfungsvorrichtung (DV),
- Mitteln zum Übertragen (320) einer Benachrichtigung (Notif) an die Überprüfungsvorrichtung (DV) über die gesicherte Verbindung, die von einer Anfrage zum Eingeben eines Identifikationscodes begleitet ist,
- Mitteln zum Empfangen des verschlüsselten Identifikationscodes, der von dem Benutzer in die Überprüfungsvorrichtung eingegeben ist,
- Mitteln zum Überprüfen der Gültigkeit des eingegebenen Identifikationscodes durch die Verarbeitungseinheit und
- Mitteln zum Bereitstellen einer Entscheidung über die Erteilung (330) einer Genehmigung (Aut) in Abhängigkeit von der Gültigkeit des eingegebenen Identifikationscodes oder von einem Fehlen von einer Dateneinheit, die von der Überprüfungsvorrichtung empfangen wird,
- wobei die Überprüfungsvorrichtung aufweist:
- Mittel zum Empfangen einer Anfrage zum Aufbauen einer gesicherten Verbindung,
- Mittel zum Aufbauen einer gesicherten Verbindung zwischen der Verarbeitungseinheit und der gesicherten Ausführungsumgebung der Überprüfungsvorrichtung (DV),
- Mittel zum Empfangen (320) einer Benachrichtigung (Notif) an die Überprüfungsvorrichtung (DV) über die gesicherte Verbindung, die von einer Anfrage zum Eingeben eines Identifikationscodes begleitet ist,
- Mittel zum Einsetzen eines gesicherten Anzeigemoduls und eines gesicherten Eingabemoduls der Überprüfungsvorrichtung,
- Mittel zum Verschlüsseln des Identifikationscodes, der von dem Benutzer in die Überprüfungsvorrichtung (DV) eingegeben ist,
- Mittel zum Übertragen des verschlüsselten Identifikationscodes an die Verarbeitungseinheit durch die Überprüfungsvorrichtung.

6. Computerprogrammprodukt, das von einem Kommunikationsnetz herunterladbar ist und/oder auf einem computerlesbaren Aufzeichnungsmedium gespeichert ist und/oder von einem Mikroprozessor ausführbar ist, **dadurch gekennzeichnet, dass** es Programmcodeanweisungen zum Ausführen eines Verfahrens zum Verarbeiten nach Anspruch 1 aufweist, wenn es auf einem Prozessor ausgeführt wird.

## Claims

1. Method for the processing by a processing entity (EnT) and a verification device (DV), of an authorization for implementing a service and/or access an item, the method being **characterized in that** it comprises:
- a step of reception (10), by the processing entity (EnT), from a requesting device (DR), of a payment request (Rq) for implementing a service and/or accessing an item;
- a step of searching (20), processing entity (EnT), for an indicator of dependency (InD) from at least one piece of data of said request (Rq) for implementing;
- when an indicator of dependency (InD) is present, a step for obtaining (30) an authorization from the verification device (DV) to implement said service and/or access said item comprising:
- obtaining (310), by the processing entity, of a piece of data representing a verification device from which authorization must be requested;
- a transmission, to the verification device (DV), of a request for setting up a secured link;
- a setting up of a secured link between the processing entity and a trusted execution environment of the verification device (DV);
- transmitting (320) a notification (Notif) to the verification device (DV), thru said secured link, accompanied by a request for entry of an identification code,
- an implementation of a secured display module and a secured entry module;
- an encryption of the entered identification code by the verification device (DV);
- a transmission, by said verification device, of the encrypted identification code to the processing entity;
- a verification, by the processing entity, of the validity of the entered PIN code by the processing entity; and
- a decision to issue (330) an authorization (Aut) according to the validity of the entered identification code or an absence of data received from the verification device

2. Method according to claim 1, **characterized in that** the decision to issue authorization according to a piece of data or an absence of data received from the device comprises a reception of:
- either a payment transaction, comprising an entry into the verification device, of said piece of information liable to be compared with a piece of reference information;
- or an absence of authorization comprising:
- a specific rejection, transmitted in a response to the above-mentioned notification; or
- an absence of a response within an allotted time.

3. Method for processing according to claim 3, **characterized in that** said piece of information liable to be compared with a piece of reference information is a personal identification code (PIN) or a biometric authentication.

4. Entity for processing an authorization for implementing a service and/or to access an item, the entity being **characterized in that** it comprises:
- means for receiving a request for implementing the service and/or accessing said item;
- means of searching for an indicator of dependency from at least one piece of data of said request for implementing the service and/or accessing said item;
- means for obtaining, from a verification device, an authorization for implementing said service and/or accessing said item, said means being implemented when an indicator of dependency is present and comprising implementing:
- means for obtaining (310), by the processing entity, of a piece of data representing (DrDv) a verification device from which authorization (Aut) must be requested;
- means for transmitting, by the processing entity, to the verification device (DV), a request for setting up a secured link;
- means for setting up a secured link between the processing entity and a trusted execution environment of the verification device (DV);
- means for transmitting (320) a notification (Notif) to the verification device (DV), thru said secured link, accompanied by a request for entry of an identification code,
- means for receiving, by said verification device, of the encrypted identification code entered by the user on said verification device;
- means for verifying, by the processing entity, of the validity of the entered PIN code by the processing entity; and
- means for issuing (330) an authorization (Aut) according to the validity of the entered identification code or an absence of data received from the verification device

5. System for processing an authorization for implementing a service and/or accessing an item, a system **characterized in that** it comprises:
- an entity for processing an authorization for implementing a service and/or accessing an item **characterized in that** it comprises:
- means for receiving a request for implementing a service and/or accessing an item;
- means of searching for an indicator of dependency from at least one piece of data of said request for implementing the service and/or accessing the item;
- means for the obtaining, from a verification device, of an authorization for implementing said service and/or accessing said item, said means being implemented when an indicator of dependency is present and comprising implementing:
- means for obtaining (310), by the processing entity, of a piece of data representing (DrDv) a verification device from which authorization (Aut) must be requested;
- means for transmitting, by the processing entity, to the verification device (DV), a request for setting up a secured link;
- means for setting up a secured link between the processing entity and a trusted execution environment of the verification device (DV);
- means for transmitting (320) a notification (Notif) to the verification device (DV), thru said secured link, accompanied by a request for entry of an identification code,
- means for receiving of the encrypted identification code entered by the user on said verification device;
- means for verifying, by the processing entity, of the validity of the entered PIN code by the processing entity; and
- means for issuing (330) an authorization (Aut) according to the validity of the entered identification code or an absence of data received from the verification device
- the verification device comprising:
- means for receiving a request for setting up a secured link;
- means for setting up a secured link between the processing entity and the trusted execution environment of the verification device (DV);
- means for receiving (320) a notification (Notif) to the verification device (DV), thru said secured link, accompanied by a request for entry of an identification code,
- means for implementing a secured display module and a secured entry module of the verification device;
- means for encrypting the entered identification code entered by the user on the verification device (DV);
- means for transmitting, by said verification device, of the encrypted identification code to the processing device.

6. Computer program product downloadable from a communications network and/or stored on a carrier readable by a computer and/or executable by a microprocessor, **characterized in that** it comprises program code instructions for executing a method for processing according to claims 1 when it is executed on a computer.
